# EUROPEAN PATENT APPLICATION

(11) **EP 4 796 795 A1**
(43) Date of publication of application: **26.08.2026**
(21) Application number: 26160190.0
(22) Date of filing: 23.02.2026
(51) Int. Cl.: F16B 12/22, A47B 47/04, F16B 12/26

(54) **MODULAR CONNECTOR SYSTEM FOR READY-TO-ASSEMBLE FURNITURE**

(30) Priority: 24.02.2025 EP 25461511
(71) Applicant: Krzyzaniak, Lukasz, 60-654 Poznan (PL)
(72) Inventor: Krzyzaniak, Lukasz, 60-654 Poznan (PL)
(74) Representative: Kancelaria Eupatent.pl Sp. z o.o.

(57) **Abstract**

The present disclosure provides a modular connector for ready-to-assemble furniture components, comprising a socket component (200) with a housing (210) having an internal guide (220) and a resilient element, and a pin component (100) with a head (110) configured to engage the internal guide (220) and the resilient element. The resilient element is configured to provide an audible click when assembled with the pin component (100), and the internal guide (220) is configured to create a tight fit between the socket component (200) and the pin component (100) when assembled. The resilient element may be a resilient tongue (240) positioned within an aperture (230) in the bottom wall (216) of the housing, or resilient side walls (211, 212) of the housing.

## Description

### FIELD OF INVENTION

The present disclosure relates to modular connectors for ready-to-assemble furniture, and more particularly to a modular connector system comprising a pin component and a socket component designed for secure and audible engagement without tools.

### BACKGROUND

In recent years, the furniture industry has witnessed a significant shift towards ready-to-assemble (RTA) furniture, driven by consumer demand for cost-effective and easily transportable options. This trend has necessitated the development of innovative connection systems that enable quick and simple assembly, ideally without requiring specialized tools or professional assistance. Such systems aim to empower consumers to assemble furniture independently, reducing costs and increasing convenience.

Existing furniture connectors generally fall into two main categories, each with its own advantages and limitations. The first category comprises connectors that provide an audible indication, typically a clicking sound, when furniture parts are properly joined. This feature offers users immediate feedback and confirmation of successful assembly, enhancing user confidence and reducing the likelihood of incorrect installation. However, these audible connectors often fail to create a sufficiently tight connection between furniture elements. Over time, this can lead to instability, looseness, or even structural failure of the assembled furniture, compromising both aesthetics and functionality.

The second category includes connectors designed to tighten the connected elements, creating a secure and stable joint. These tightening connectors typically employ mechanisms such as cam locks, eccentric nuts, or threaded components to draw furniture parts together firmly. While effective in creating sturdy connections, these connectors lack the audible feedback provided by the first category. This absence of audible confirmation can lead to uncertainty during the assembly process, potentially resulting in incomplete or incorrect connections if users are unsure whether the parts have been properly engaged.

Given the limitations of existing connector types, there is a need for an innovative solution that combines the benefits of both categories while mitigating their respective drawbacks. An ideal connector would provide both an audible indication of successful assembly and a mechanism for creating a tight, secure connection between furniture elements. Such a connector would enhance the user experience by offering reassurance during assembly while ensuring long-term stability and durability of the finished furniture piece.

### SUMMARY

In a first aspect, a modular connector for ready-to-assemble furniture components is provided. The modular connector includes a socket component with a housing having an internal guide and a resilient element, a pin component with a head configured to engage the internal guide and the resilient element, wherein the resilient element is configured to provide an audible click when assembled with the pin component, and wherein the internal guide is configured to create a tight fit between the socket component and the pin component when assembled.

This modular connector design provides a convenient assembly mechanism for furniture components, offering both audible feedback and a secure connection, without the need to use any tools. The audible click confirms proper assembly, while the tight fit ensures stability of the assembled furniture. An important feature is that the assembly between the furniture elements is achieved due to the head of the pin being pulled towards the base of the socket as the pin moves laterally from the first end to the second end of the socket. This generates the assembly force that pulls the furniture elements towards each other. On the other hand, the click effect is generated by deforming the resilient element(s), while the force of deformation is independent on the force of assembly.

The resilient element may be a resilient tongue that generates the audible click by interacting with the head of the pin component. The use of a resilient tongue allows for a simple yet effective mechanism to produce the audible feedback, enhancing the user experience during furniture assembly.

The housing may comprise a bottom wall with an aperture, and the resilient tongue may be positioned within the aperture. Positioning the resilient tongue within an aperture in the bottom wall allows for efficient use of space within the socket component while providing the necessary flexibility for the tongue to function.

The resilient tongue may be U-shaped with a free end extending above the bottom wall to engage the head of the pin component. The U-shaped design of the resilient tongue provides enhanced flexibility and durability, allowing for repeated engagement and disengagement with the pin component without losing its effectiveness.

Alternatively, the resilient element may comprise resilient side walls that generate the audible click by interacting with the head of the pin component. Using resilient side walls as the click mechanism offers an alternative design that can be suitable for different manufacturing processes or specific furniture designs.

The housing may comprise a first end wall, a second end wall, a first side wall, a second side wall, and a bottom wall, and the internal guide may comprise a first side section along the first side wall, a second side section along the second side wall, and an end section along the second end wall. This specific configuration of the housing and internal guide provides a robust structure that ensures proper alignment and engagement of the pin component within the socket component.

The internal guide may have a slanted guide bottom edge along the first side section and the second side section, with a height extending from a minimum height at the ends to a maximum height at the end section. The slanted guide bottom edge facilitates smooth insertion of the pin component and helps to create a progressively tighter fit as the pin is fully engaged, enhancing the overall stability of the connection.

The bottom wall may comprise a lower segment, an upper segment, and a step between the lower segment and the upper segment. This stepped design of the bottom wall allows for precise positioning of the socket component within a furniture component, ensuring proper alignment and secure installation.

The pin component may comprise a stem with an upper flange and multiple barbs. The inclusion of an upper flange and multiple barbs on the pin component's stem enhances its retention within the furniture component, providing a secure and stable connection point for the socket component.

Alternatively, the pin component may comprise a stem with a hole at its tip. A hole at the tip of the pin component's stem allows for additional attachment options, such as screwing the pin into place or attaching other furniture components.

The socket component may have a first opening diameter at a first end wall and a smaller second opening diameter at a second end wall, and the head of the pin component may have a diameter in a range between the first and second opening diameters. This configuration ensures that the pin component can be easily inserted into the socket component while still maintaining a secure fit when fully engaged.

The socket component may have at least one retaining lug on its external surface to secure it within a furniture component. The inclusion of retaining lugs enhances the stability of the socket component within the furniture component, preventing unwanted movement or dislodging during use.

The modular connector may be used in various furniture designs, including but not limited to shelving units, cabinets, tables, and chairs. The connector may be made from different materials such as plastic, metal, or composite materials, depending on the specific requirements of the furniture application.

In a second aspect, a socket for a modular connector system for ready-to-assemble furniture is provided. The socket includes a housing with first and second end walls, first and second side walls, a bottom wall with an aperture, an internal guide along the first side wall, second side wall, and second end wall, and a U-shaped resilient tongue in the aperture, extending above the bottom wall, wherein the resilient tongue is configured to provide an audible click when engaged with a pin component head, and wherein the internal guide is configured to create a tight fit with the pin component when assembled. This socket design incorporates multiple features to ensure a secure and user-friendly connection with a pin component, making it particularly suitable for ready-to-assemble furniture applications.

In a third aspect, a socket for a modular connector system for ready-to-assemble furniture is provided. The socket includes a housing with first and second end walls, resilient first and second side walls, an internal guide along the first side wall, second side wall, and second end wall, wherein the resilient side walls are configured to provide an audible click when engaged with a pin component head, and wherein the internal guide is configured to create a tight fit with the pin component when assembled. This alternative socket design utilizes resilient side walls to provide the audible feedback, offering a different approach to achieving the same convenient and secure assembly experience.

In a fourth aspect, a method for manufacturing ready-to-assemble furniture comprising furniture boards is provided. The method includes providing pins and sockets of the modular connector according to any of the previous aspects, forming receptacles in the furniture boards for the sockets, forming holes in the furniture boards for the pins, and pre-installing the sockets and the pins into the furniture boards. This manufacturing method streamlines the production of ready-to-assemble furniture by incorporating the modular connector components directly into the furniture boards during the manufacturing process. This approach reduces assembly time for the end-user and ensures proper placement of the connector components.

The method may also involve packaging the pre-installed furniture boards with assembly instructions for the end-user.

Below is a summary of features and functions of components described herein.

The pin is one of the primary components of the modular connector system, designed to engage and secure within a corresponding socket. Functionally, the pin provides a protruding element that is inserted into or through a furniture board, enabling tool-free connection. The pin can be formed of a durable plastic or metal material and is preferably pre-installed into the furniture board.

The head of the pin is configured to interact with the internal features of the socket, such as the resilient tongue or resilient side walls. This head is responsible for generating the audible click when being snapped into place. Functionally, the head's contour and diameter carry the force required to push the pin into the socket and the secure retention once engaged. In some examples, the head may be slightly domed or angled to facilitate smoother insertion and reduce frictional wear on the socket components.

The neck of the pin serves as the transitional section between the head and the stem. It generally has a reduced diameter to fit into the narrower passage defined by the internal guide of the socket. The neck also provides the clearance needed for the resilient element or resilient side walls to snap over the head.

The stem extends from the neck and is configured to anchor the pin within a furniture board or another furniture component. Depending on design preferences, the stem may be press-fit, hammered, or screwed into a pre-drilled hole. Alternatively, it can be glued within the hole for increased fixation. Multiple barbs can be formed along or at the end of the stem to enhance retention. The length of the stem is chosen to match typical board thicknesses.

The upper flange on the stem acts as a stop or limit for the insertion depth of the pin. When the pin is pushed or hammered into a hole in the furniture board, the upper flange seats against the board surface to ensure accurate positioning. It also prevents the pin from being driven too far, which could impede engagement with the socket. In some variants, the flange may be contoured or chamfered to improve compatibility with countersunk holes or different material thicknesses. During engagement of the pin and socket, upper flange is accommodated in the space between the top edge of the socket and the guide.

The pin is preferably injection molded, but other techniques can be used as well for its manufacture, such as 3D additive manufacturing, turning, etc.

The socket is the complementary component to the pin, forming the second component of the modular connector system. Its primary functionality is to receive and securely retain the head of the pin. Internally, the socket houses features such as an internal guide and a resilient element (e.g., tongue or side walls) that together produce an audible click and a tight fit. The socket can be installed in a face or edge of a furniture board, depending on the design requirements and available space. It can be press-fit or secured by glue within a receptacle in the furniture board.

The socket is preferably injection molded, but other techniques can be used as well for its manufacture, such as 3D additive manufacturing, milling, etc.

The housing of the socket encloses and supports the internal guide, resilient elements, and may comprise other functional sub-features like retaining lugs. It has an external contour designed to fit into a pre-milled or pre-drilled receptacle in the furniture board. The housing is typically injection molded or formed in one piece to simplify manufacturing and assembly. Its structural integrity is crucial for ensuring the socket does not deform excessively during engagement, thereby preserving the repeatability of the click mechanism.

The side walls define the lateral boundaries of the housing. In some embodiments, these walls can be designed with resilient properties, such that they flex outward when the pin head is inserted, producing the audible click once the neck passes through. In other embodiments, these walls may serve as rigid supports for the resilient tongue or the internal guide. The thickness and material composition of the side walls influence the overall flexibility or rigidity of the socket.

The end walls close off the housing at the longitudinal ends. They are preferably shaped as semi-circular to match the required receptacle geometry.

The bottom wall spans between the side walls and end walls to form a floor within the housing. In embodiments using a resilient tongue, the bottom wall may incorporate an aperture where the tongue is formed or positioned. The bottom wall can also feature stepped sections that help position the socket at the correct orientation in the furniture board when the receptacle has variable depth.

The internal guide is a key structural element within the socket that ensures proper alignment and retention of the pin head. By providing a slanted guide bottom edge and carefully spaced side sections, the internal guide helps transition the pin from the wide opening at the first end wall to the tighter fit near the second end wall and lowering the pin's head into the socket such as to tighten the connection of furniture components.

The aperture in the bottom wall is provided when a resilient tongue that is used as the clicking mechanism. This aperture can run longitudinally or be localized to the area under the tongue. The aperture allows the tongue to flex downward or upward during pin insertion and removal. Its size and shape influence how much the tongue can deflect and how pronounced the click will be. In certain implementations, the aperture may include chamfers or projections that limit the tongue's movement.

The resilient tongue is an elastic element that deforms upon contact with the pin head and returns to its original shape to create an audible click. It may include multiple arcs and an inflection to optimize both flexibility and durability. The first arc generally protrudes above the bottom wall to engage the pin, while the second arc and the inflection define a spring-like structure. By adjusting the geometry of these arcs, designers can fine-tune the force needed for engagement and the loudness of the click.

Cutouts may be formed in the internal guide or bottom wall. In manufacturing, these cutouts facilitate the ejection of the molded socket from an injection mold by means of ejector pins, so that the socket side walls can be perpendicular to its top and bottom edges, and can also reduce material usage. In some variations, cutouts may also help reduce the weight of the socket without compromising structural integrity. Alternatively, the socket side walls can be made slightly slanted with respect to its top and bottom edges to facilitate removal of the socket from the injection mold, in such a case it may be not necessary to use the cutouts for ejector pins. The socket may have formed retaining lugs in form of external projections on the housing that help keep the socket firmly embedded within the furniture board. A chamfered bottom portion may allow smooth insertion, whereas a step top edge provides a locking shoulder. These lugs can be tailored in shape and number to accommodate different board materials or thicknesses. In certain implementations, a single lug might suffice, while in others, multiple lugs around the perimeter of the housing enhance rotational stability.

### BRIEF DESCRIPTION OF FIGURES

Various embodiments are herein described, by way of example only, with reference to the accompanying drawings, wherein:
FIG. 1 is an exploded perspective view of a modular furniture connection system, in accordance with an aspect of the present disclosure;
FIG. 2 is a perspective view of a socket for a modular furniture connection system, in accordance with an aspect of the present disclosure;
FIG. 3 is a cross-sectional view of the socket of FIG. 2, in accordance with an aspect of the present disclosure;
FIG. 4A is a perspective view showing installation of a socket into a furniture board, in accordance with an aspect of the present disclosure;
Fig. 4B is a top view showing a socket installed in the furniture board, in accordance with an aspect of the present disclosure;
FIG. 5A is a perspective view of an alternative embodiment of a socket, in accordance with an aspect of the present disclosure;
FIG. 5B is a perspective view of another alternative embodiment of a socket, in accordance with an aspect of the present disclosure;
FIG. 6 is an orthogonal view of a pin for a modular furniture connection system, in accordance with an aspect of the present disclosure;
FIG. 7 is an orthogonal view showing installation of the pin of FIG. 6 in a furniture board edge, in accordance with an aspect of the present disclosure;
FIG. 8 is an orthogonal view of an alternative embodiment of a pin, in accordance with an aspect of the present disclosure;
FIG. 9 is an exploded view showing assembly of pins with a drawer guide, in accordance with an aspect of the present disclosure;
FIG. 10 is a flowchart showing steps for engaging a pin with a socket, in accordance with an aspect of the present disclosure;
FIG. 11 is a flowchart showing steps for disengaging a pin from a socket, in accordance with an aspect of the present disclosure;
FIG. 12 is an exploded view showing assembly of a back board to a furniture structure, in accordance with an aspect of the present disclosure;
FIG. 13 is a perspective view of another alternative embodiment of a socket, in accordance with an aspect of the present disclosure; and
FIG. 14 is a top view of the socket of FIG. 13, in accordance with an aspect of the present disclosure.
Fig. 15A shows a first optional variant of the fourth embodiment of the socket.
Fig. 15B shows a second optional variant of the fourth embodiment of the socket.

Common reference numerals are used throughout the figures to indicate similar features.

### DETAILED DESCRIPTION

The following detailed description is of the best currently contemplated modes of carrying out the invention. The description is not to be taken in a limiting sense, but is made merely for the purpose of illustrating the general principles of the invention.

The present disclosure relates to a modular connector for use in ready-to-assemble furniture components. The modular connector provides a convenient and secure means for joining furniture parts without requiring specialized tools or extensive assembly knowledge.

The modular connector comprises two main components: a socket component and a pin component. The socket component includes a housing that contains an internal guide structure and a resilient element. The pin component features a head portion that is configured to engage with both the internal guide and the resilient element of the socket component.

When the pin component is inserted and engaged with the socket component, the resilient element is designed to produce an audible click. This audible feedback provides confirmation to the user that the connection has been properly established.

The internal guide within the socket component is structured to create a tight fit with the pin component upon assembly. This tight fit ensures a secure and stable connection between the furniture parts being joined.

By utilizing this modular connector system, furniture manufacturers can design products that are easy for consumers to assemble while maintaining structural integrity and a professional appearance. The system allows for efficient packaging and shipping of unassembled furniture pieces, which can then be readily assembled by the end user.

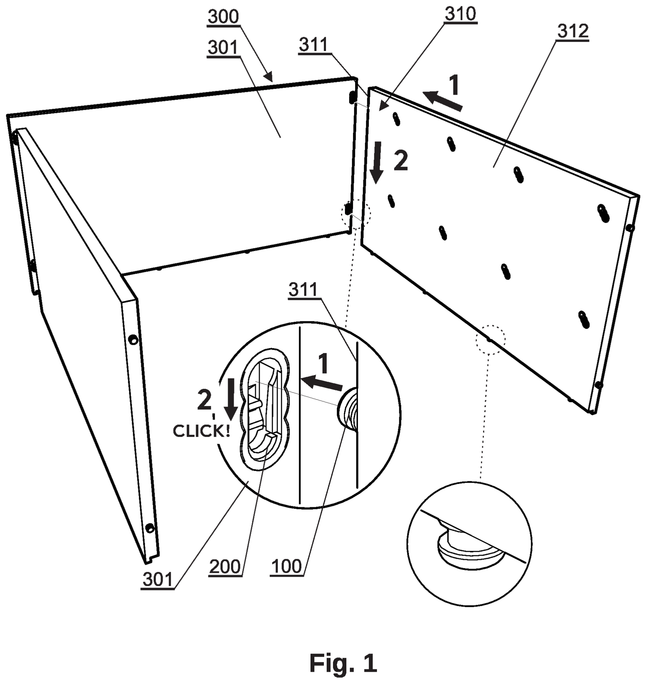

The modular connector system provides a convenient method for assembling furniture components. As illustrated in Fig. 1, the system comprises a pin 100 and a socket 200 that work together to join furniture boards.

A first furniture board 300 includes a first furniture board face 301 where a socket 200 may be mounted. A second furniture board 310 includes a second furniture board edge 311 where the pin 100 may be mounted. It will be evident that the pin 100 can be mounted in the board face as well and the socket 200 may be mounted in a board edge provided the edge is sufficiently wide.

In preparing furniture components for assembly, receptacles must be formed in the furniture boards for the sockets 200. These receptacles allow for secure installation of the sockets 200 into the furniture boards. Similarly, holes must be formed in the furniture boards for the pins 100, enabling the pins 100 to be firmly anchored in the furniture components.

The sockets 200 and pins 100 of the modular connector may be pre-installed into their respective furniture boards during the manufacturing process. This pre-installation allows for efficient packaging and shipping of unassembled furniture pieces while ensuring that all necessary connection components are in place for end-user assembly without the need to use any tools.

During assembly, the pin 100 mounted in the second furniture board edge 311 engages with the socket 200 installed in the first furniture board face 301. The pin 100 is configured to slide into the socket 200, creating a secure connection between the two furniture boards. This sliding and engagement mechanism allows for easy assembly without the need for specialized tools or extensive knowledge of furniture construction.

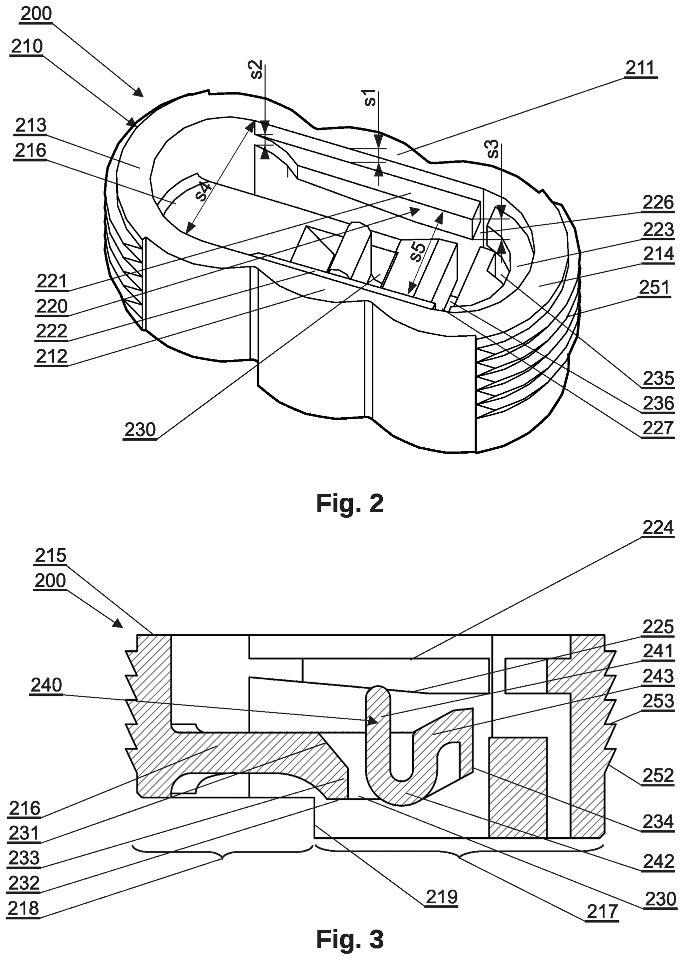

Figs. 2 and 3 show perspective and cross-sectional views, respectively, of a socket 200 according to its first embodiment. The socket 200 includes a housing 210 having a first side wall 211, a second side wall 212, a first end wall 213, a second end wall 214, and a housing top edge 215.

The housing 210 comprises a bottom wall 216 with a lower segment 217 and an upper segment 218. A step 219 is formed between the lower segment 217 and the upper segment 218. The bottom wall 216 includes an aperture 230 extending along its length. The aperture 230 has a first end 233 and a second end 234. At the first end 233, the aperture 230 includes a chamfer 231 and a projection 232.

A guide 220 extends along the internal walls of the housing 210. The guide 220 comprises a first side section 221 extending along the first side wall 211, a second side section 222 extending along the second side wall 212, and an end section 223 running along the second end wall 214. The guide 220 has a guide top edge 224 positioned at a first distance s1 from the housing top edge 215, such as to accommodate a flange of a pin, as will be shown in the further description. The guide 220 also has a guide bottom edge 225 that is slanted along the first side section 221 and the second side section 222. The height of the guide 220 extends from a minimum height s2 at the ends of the side sections to a maximum height s3 at the end section 223.

The socket 200 has a first opening diameter s4 at the first end wall 213 and a smaller second opening diameter s5 at the second end wall 214 delimited by the guide 220. This configuration allows the head of a pin component 100 to have a diameter in a range between the first opening diameter s4 and the second opening diameter s5.

The housing 210 may include cutouts to facilitate injection molding as a single piece, so that it can be easily removed from the injection mold by means of ejector pins passing through the cutouts. The guide 220 has a guide first cutout 226 and a guide second cutout 227 located between the side sections and the end section. The bottom wall 216 features a bottom first cutout 235 along part of the first end wall 213 and a bottom second cutout 236 between the side walls 211, 212.

A resilient tongue 240 is positioned within the aperture 230 of the bottom wall 216. The tongue 240 is U-shaped and comprises a first end 241 that protrudes above the bottom wall 216 to engage the head of a pin component. The tongue 240 also includes a base section 242 that fits within the aperture and may extend below the bottom, and a second end 243 that is attached to the bottom at the second end of the aperture 230. This tongue 240 is configured to generate an audible click by interacting with the head of a pin component.

The external surface of the housing 210 may include at least one retaining lug 251 to secure the socket (first embodiment) 200 within a furniture component. The at least one retaining lug 251 may have a chamfered bottom portion 252 and a step top edge 253.

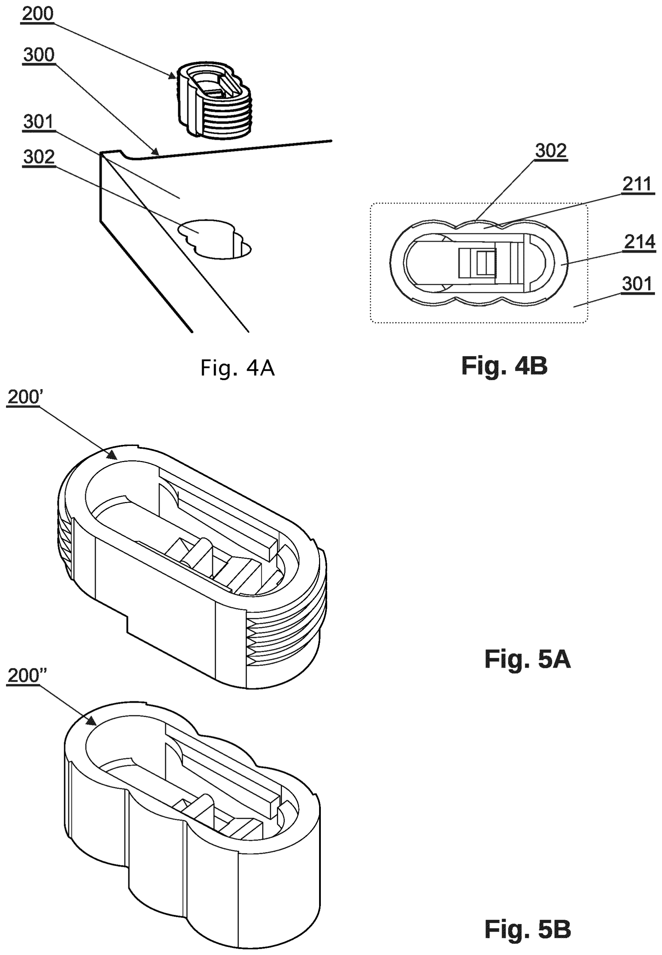

The outline of the housing of the socket 200 of the first embodiment is shaped as three semi-cylindrical sections, with the middle section forming the side walls 211, 212 and the end sections forming the end walls 213, 214. This configuration allows the socket 200 to be installed in a receptacle 302 formed by drilling three adjacent holes in a first furniture board face 301 of a first furniture board 300, as shown in Fig. 4A.

As can be seen in Fig. 4B, the side walls 211, 212 and optionally the side sections of the end walls 213, 214 may have a narrower external outline as compared to the internal outline of the receptacle 302. These narrowed body fragments form compensation slots after the installation, so that some amount of play is left at the side sections between the socket 200 and the receptacle, allowing slight deformation of the socket, which may be beneficial to reduction of risk of socket breaks during its installation.

In a second embodiment, the socket 200' may have an obround housing configuration, as illustrated in Fig. 5. This configuration differs from the previously described embodiment by incorporating straight side walls 211, 212 along the length of the socket, while maintaining semicircular end walls 213, 214. The obround shape provides an alternative design that may be suitable for different installation methods or furniture designs. The obround socket can be installed in a receptacle formed by milling in the furniture board. This installation method contrasts with the drilling method described for the previous embodiment.

The internal structure and functionality of the obround socket 200' of the second embodiment may remain similar to the previously described embodiment, including features for guiding and retaining a pin component. However, the external shape is adapted to accommodate this specific installation method, potentially offering advantages in certain furniture designs or assembly processes.

Regardless of whether the receptacle is made by milling or drilling, it allows for easy creation of a receptacle with one section milled more shallow than the other section. This variation in depth can help ensure proper orientation of the socket 200, 200' during installation and use, such that the lower segment 217 is inserted into the deeper section and the upper segment 218 inserted into the more shallow section.

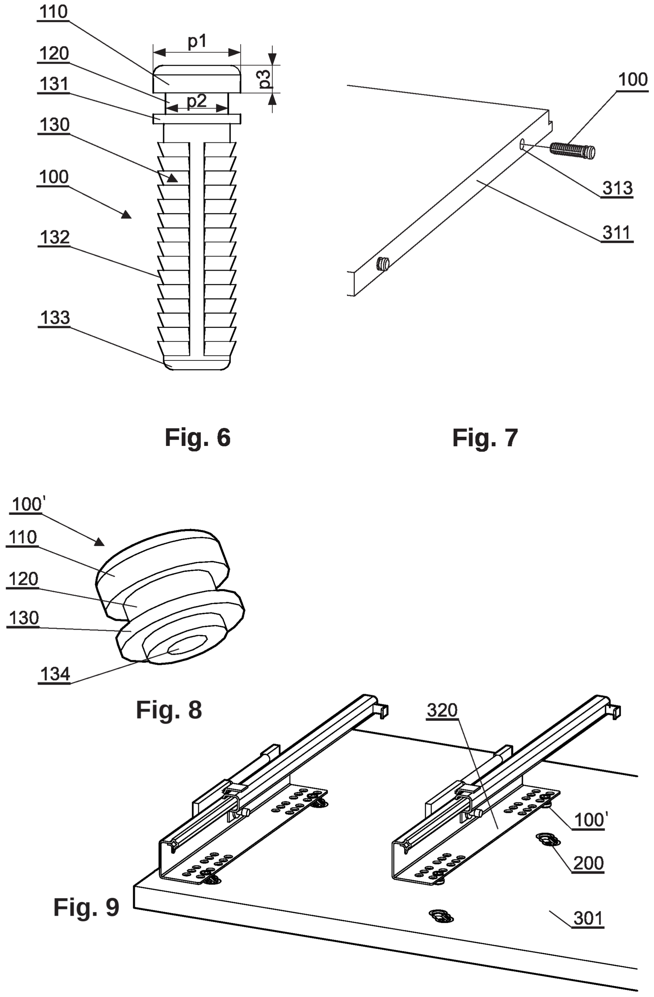

Figs. 6-7 illustrate a first embodiment of a pin 100 for use in the modular connector system. The pin 100 comprises a head 110 connected to a neck 120, which in turn is connected to a stem 130.

The head 110 has a head diameter p1 and a head height p3. The neck 120 has a neck diameter p2, which is smaller than the head diameter p1. This configuration allows the head 110 to engage with the internal guide and the tongue of the socket while the neck 120 can pass through narrower openings.

The stem 130 extends from the neck 120 and is longer than the neck 120. An upper flange 131 is positioned near the junction of the stem 130 and the neck 120. Multiple barbs 132 protrude outward along the length of the stem 130. The stem 130 terminates in a narrowed tip 133 at its bottom end.

The stem 130 may further comprise one or more longitudinal grooves or slots (e.g. two opposed axial notches) to facilitate distribution/spreading of adhesive when the pin is glued into the hole 313.

Fig. 5B shows a third embodiment of the socket 200", which differs from the first embodiment in that it does not contain any retaining lugs and/or narrowed sections of outer outline forming compensation slots after installation. This type of socket can be secured into a receptacle within the furniture board e.g. by gluing. This type of socket is also applicable when the socket is made of materials of sufficient elasticity that can withstand high stress during installation.

Fig. 7 demonstrates the installation of the pin 100 in a second furniture board edge 311. A hole 313 is formed in the second furniture board edge 311 to receive the stem 130 of the pin 100. The pin 100 can be hammered into the hole 313, with the barbs 132 providing secure anchoring within the furniture board. The upper flange 131 limits the depth of installation of the pin 100 within the furniture board, ensuring proper positioning for engagement with a corresponding socket.

This design of the pin 100 allows for easy installation in furniture components while providing a secure connection point for assembly with other furniture parts using the socket component of the modular connector system.

Figs. 8-9 illustrate a second embodiment of the pin 100' and its application in a drawer guide assembly.

Fig. 8 shows the pin 100' comprising a head 110 connected to a neck 120, which is in turn connected to a stem 130. In this embodiment, the stem 130 is shorter than the neck 120 and includes a hole 134, which may be threaded, at its free end. This configuration allows the pin 100' to be screwed to another furniture element, such as a drawer guide 320.

Fig. 9 demonstrates an application of this second embodiment of the pin 100' in conjunction with a drawer guide 320. Two pins 100 are attached by screws to the drawer guide 320 via the holes 134 in their stems 130. The socket 200 is mounted in the first furniture board face 301. This arrangement allows for click assembly of the drawer guide 320 to the sockets 200 installed within the first furniture board face 301. The pins 100 are designed to engage with their corresponding sockets 200.

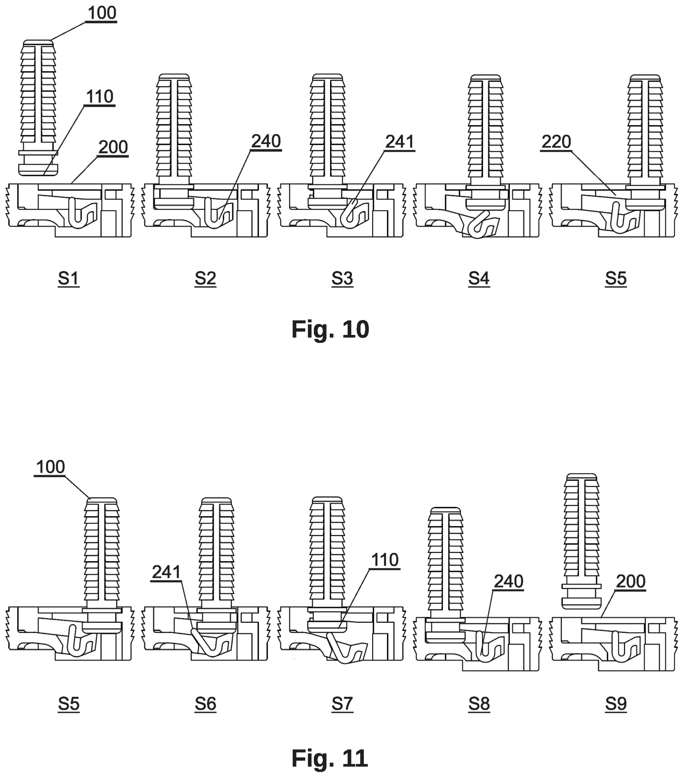

The modular connector system provides a secure and audible engagement mechanism between a pin 100 and a socket 200. Fig. 10 illustrates the step-by-step process of engaging the pin 100 with the socket 200.

At first, in step S1, the pin 100 with a head 110 is positioned above the socket 200. The pin 100 is then lowered into the socket 200 in a second step S2, such that the head 110 contacts the bottom of the socket 200.

Step S3 shows the pin 100 being moved toward the second end of the socket 200. During this movement, the head 110 begins to interact with the tongue 240. The first, free end 241 of the tongue 240 starts to deform as the head 110 moves along.

In step S4, the head 110 continues its movement, causing further deformation of the tongue 240 and the first end 241. This deformation requires force to be applied by the user.

Step S5 represents the final position wherein the head 110 of the pin 100 is retained between the guide 220 and the bottom wall of the socket 200. The tongue 240 returns to its original position, creating an audible click and helping to secure the connection.

Fig. 11 demonstrates the process of disengaging the pin 100 from the socket 200. Starting from the initial engaged position in step S5, the pin 100 begins movement toward disengagement in step S6, where the head 110 starts to interact with the tongue 240.

At step S7, the head 110 of the pin 100 presses against the first end 241 of the tongue 240, causing the tongue 240 to deform within the socket 200. This deformation requires force to be applied by the user.

A release position in step S8 shows that the head 110 of the pin 100 has moved past the tongue 240, allowing the tongue 240 to return to its natural position. This release produces an audible click.

Finally, at a removal position in step S9, the pin 100 reaches a position where the head 110 can be lifted out of the socket 200 through the first opening.

The engagement and disengagement processes utilize the interaction between the head 110 of the pin 100 and the internal components of the socket 200. This design combines a secure connection by means of the guide with audible feedback during both assembly and disassembly of furniture components.

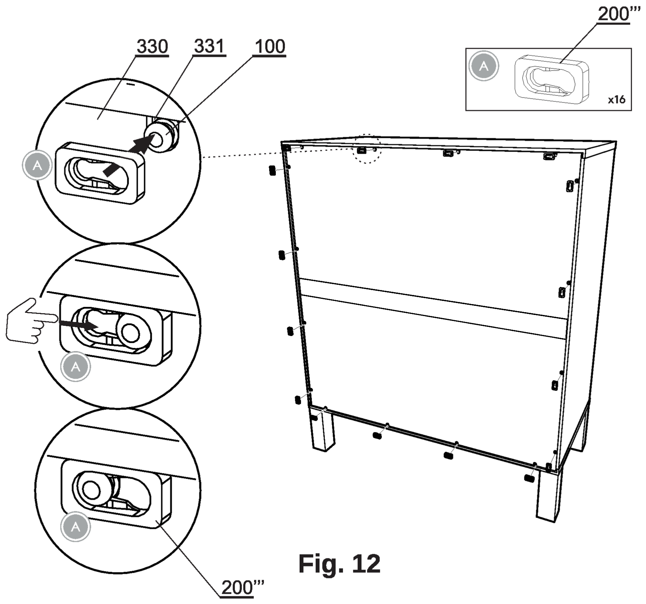

Figs. 12-14 illustrate a fourth embodiment of a socket 200‴ and its application in assembling a back board to furniture components preassembled to a box structure.

Fig. 12 shows an exploded view of the assembly process for attaching a back board 330 to a furniture structure. The back board 330 includes cutouts 331 that accommodate pins 100. Multiple sockets 200‴ are used as loose elements that can be snap-fitted onto the pins 100 to secure the back board 330 to the edges of the furniture structure.

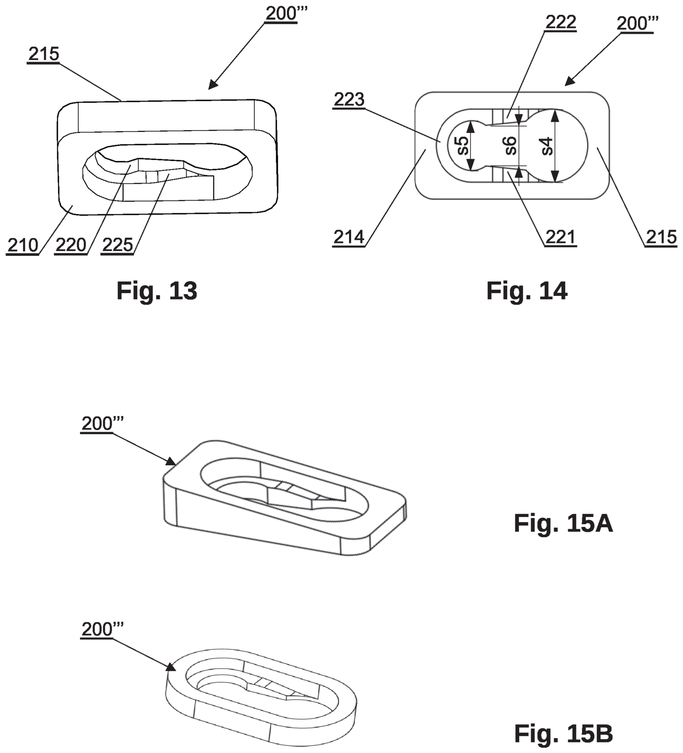

Fig. 13 provides a perspective view of the socket 200‴. The socket 200‴ comprises a housing 210 with a housing top edge 215. The socket 200‴ includes a guide 220 having a first side section 221, a second side section 222, and an end section 223. The guide 220 features a guide bottom edge 225 that is slanted along the first side section 221 and the second side section 222. The socket has the same thickness along its length, which may facilitate its manufacture.

Fig. 14 presents a top view of the socket 200‴, revealing the internal configuration of the housing 210. The housing 210 includes a second end wall 214. The view illustrates a first opening diameter s4 and a second opening diameter s5, with an internal width s6 between them. The first opening diameter s4 is larger than the second opening diameter s5, creating a narrowing passage defined by the internal width s6.

In this embodiment, the socket 200‴ is designed with resilient side walls 211, 212 that serve as the resilient element. These resilient side walls 211, 212 are configured to generate an audible click when engaged with a head 110 of a pin component 100. As the socket 200‴ is pushed along the head 110 of the pin 100, the side walls 211, 212 of the socket housing 210 are resiliently deformed outwards. When the neck 120 of the pin 100 reaches the second opening with diameter s5, the side walls 211, 212 return to their initial position, producing the audible click sound.

The guide 220 of the socket 200‴ is structured to create a tight fit with the pin component 100 when assembled. As the socket 200‴ is slid along the neck 120 of the pin 100, the guide 220 presses the socket 200‴ and the pin 100 towards each other, ensuring a secure connection.

This configuration allows the socket 200‴ to be used as a loose element that can be snap-fitted onto pins 100 that have been passed through the cutouts 331 in the back board 330. By engaging the sockets 200‴ with the pins 100, the back board 330 can be pressed towards the edges of the box, creating a secure assembly without the need for additional tools or complex assembly procedures.

Fig. 15A shows a first optional variant of the socket 200‴ of the fourth embodiment,. In that variant, the height of the guide 220 extends from a minimum height at the ends of the side sections to a maximum height at the end section 223.

Fig. 15B shows a second optional variant of the socket 200‴ of the fourth embodiment, having an obround outline, which optimizes the amount of material used for manufacture and makes it more resilient during installation.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A modular connector for ready-to-assemble furniture components, comprising:
a socket component (200) with a housing (210) having an internal guide (220) and a resilient element;
a pin component (100) with a head (110) configured to engage the internal guide (220) and the resilient element;
wherein the resilient element is configured to provide an audible click when assembled with the pin component (100); and
wherein the internal guide (220) is configured to create a tight fit between the socket component (200) and the pin component (100) when assembled.

2. The modular connector of claim 1, wherein the resilient element is a resilient tongue (240) that generates the audible click by interacting with the head (110) of the pin component (100).

3. The modular connector of claim 2, wherein the housing comprises a bottom wall (216) with an aperture (230), and the resilient tongue (240) is positioned within the aperture (230).

4. The modular connector of claim 3, wherein the resilient tongue (240) is U-shaped with a free end (241) extending above the bottom wall (216) to engage the head (110) of the pin component (100).

5. The modular connector of claim 1, wherein the resilient element comprises resilient side walls (211, 212) that generate the audible click by interacting with the head (110) of the pin component (100).

6. The modular connector of any of claims 1 to 5, wherein the housing (210) comprises:
a first end wall (213);
a second end wall (214);
a first side wall (211);
a second side wall (212); and
a bottom wall (216); and
wherein the internal guide (220) comprises:
a first side section (221) along the first side wall (211);
a second side section (222) along the second side wall (212); and
an end section (223) along the second end wall (214).

7. The modular connector of any of claims 1 to 6, wherein the internal guide (220) has a slanted guide bottom edge (225) along the first side section (221) and the second side section (222), with a height extending from a minimum height (s2) at the ends to a maximum height (s3) at the end section (223).

8. The modular connector of any of claims 1 to 7, wherein the bottom wall (216) comprises:
a lower segment (217);
an upper segment (218); and
a step (219) between the lower segment (217) and the upper segment (218).

9. The modular connector of any of claims 1 to 8, wherein the pin component (100) comprises a stem (130) with an upper flange (131) and multiple barbs (132).

10. The modular connector of any of claims 1 to 8, wherein the pin component (100) comprises a stem (130) with a hole (134) at its tip.

11. The modular connector of any of claims 1 to 10, wherein the socket component (200) has a first opening diameter (s4) at a first end wall (213) and a smaller second opening diameter (s5) at a second end wall (214), and the head (110) of the pin component (100) has a diameter (p1) in a range between the first and second opening diameters.

12. A ready to assemble furniture set, comprising a plurality of furniture components with pre-installed pins (100) and sockets (200) of the modular connector according to any of claims 1-11.

13. A socket (200, 200') for a modular connector system for ready-to-assemble furniture, comprising:
a housing (210) with:
first and second end walls (213, 214);
first and second side walls (211, 212);
a bottom wall (216) with an aperture (230);
an internal guide (220) along the first side wall (211), second side wall (212), and second end wall (214);
a U-shaped resilient tongue (240) in the aperture (230), having a free end (241) extending above the bottom wall (216);
wherein the resilient tongue (240) is configured to provide an audible click when engaged with a pin component head (110); and
wherein the internal guide (220) is configured to create a tight fit with the pin component (100) when assembled.

14. A socket (200‴) for a modular connector system for ready-to-assemble furniture, comprising:
a housing (210) with:
first and second end walls (213, 214);
resilient first and second side walls (211, 212);
an internal guide (220) along the first side wall (211), second side wall (212), and second end wall (214);
wherein the resilient side walls (211, 212) are configured to provide an audible click when engaged with a head (110) of the pin component (100); and
wherein the internal guide (220) is configured to create a tight fit with the pin component (100) when assembled.

15. A method for manufacturing ready-to-assemble furniture comprising furniture boards, comprising:
providing pins (100) and sockets (200) of the modular connector according to any of claims 1-11;
forming receptacles (302) in the furniture boards for the sockets (200);
forming holes (313) in the furniture boards for the pins (100);
pre-installing the sockets (200) and the pins (100) into the furniture boards.
